# EUROPEAN PATENT SPECIFICATION

(11) **EP 1 838 535 B1**
(45) Date of publication and mention of the grant of the patent: **11.03.2009**
(21) Application number: 06718089.3
(22) Date of filing: 12.01.2006
(51) Int. Cl.: B41M 1/30, B41M 1/34, B29D 11/00

(54) **METHOD OF COLORING A CONTACT LENS**
VERFAHREN ZUR FÄRBUNG EINER KONTAKTLINSE
PROCEDE DE COLORATION D'UNE LENTILLE DE CONTACT

(30) Priority: 20.01.2005 US 645550 P
(43) Date of publication of application: 03.10.2007
(73) Proprietor: Johnson and Johnson Vision Care, Inc., Jacksonville, FL 32256 (US)
(72) Inventor: STREIBIG, Daniel G., Ballwin, Missouri 63021 (US)
(74) Representative: Fisher, Adrian John
(86) International application number: PCT/US2006/000974
(87) International publication number: WO 2006/078520

(56) References cited:
- US-A1- 2002 057 416

## Description

### Background of the Invention

### (1) Field of the Invention

This invention relates to colored contact lenses and methods of making colored contact lenses.

### (2) General Background

Pad printed processes are often utilized to mass produce colored cosmetic corrective and non-corrective contact lenses. An example of a pad printing process typical of the art is given in US patent application no US 2002/0057416. Pad-printing generally comprises the use of printing plates or cliches that have one or more depressions that collectively form a pattern that is transferable to a contact lens. During a pad-printing process, the fluent colorant is introduced into the depressions of the cliché. After the fluent colorant is introduced into the depressions of the cliché, a doctor blade or an ink cup is then wiped across the surface of the cliché surrounding the depression(s) to remove excess ink from the cliché. A printing pad is then pressed against the cliché to transfer at least some of the colorant from the depressions to the printing pad. Finally, the printing pad is pressed against the contact lens to transfer the colorant from the printing pad to the contact lens.

A disadvantage of using pad-printing techniques is that the clichés wear as a result of the wiping process and generally must be replaced after approximately one-hundred thousand cycles, thereafter being no longer suitable for use. In addition to costs associated with forming new clichés, the replacement process requires halting production, dismounting the worn cliché or cliché set, and then mounting and aligning new cliché(s). Aligning new clichés is often time consuming and tedious. When printing detailed image patterns comprising multiple layers of individual colorants, each new cliché for a particular colorant layer must not only be properly aligned to the contact lenses, but also to each of the other clichés. As a result, numerous iterations of resuming then halting the lens production line to verify the cliché alignment accuracy are often required. As images for coloring contact lenses become more intricate with higher resolutions and increasing numbers of color layers, the difficulty of aligning clichés and the time spent to do so increases.

### Summary of the Invention

The pad-printing methods of the present invention are an improvement over prior art pad-printing methods of coloring contact lenses. In general, the present invention increases the useful life of clichés and improves the image resolution achievable using printing pad techniques.

According to the invention, a method comprises a step of forming a cliché. The cliché comprises a piece of material having at least one depression formed therein using an electrical discharge machining process. This method also comprises a step of introducing a fluent colorant into the depression of the cliché. Still further, this method comprises a step of transferring at least some of the colorant from the depression to a contact lens.

In a preferred embodiment of the invention, the cliché comprises a piece of material having a hardness rating in excess of Rockwell 64 (measured on the °C" Scale).

In another preferred embodiment of the invention, the cliché comprises a piece of material having a flat surface portion. The flat surface portion defines a plane and the depression extends through the plane and into the piece of material a maximum depth perpendicular to and beyond the plane. Additionally, the method comprises a step of wiping excess fluent colorant from the flat surface portion surrounding the depression, the wiping causing the piece of material to wear in a manner such that the maximum depth of the depression is reduced. The steps of introducing a fluent colorant into the depression of the cliché, wiping excess fluent colorant from the flat surface portion surrounding the depression, and transferring at least some of the colorant from the depression to a contact lens may occur in a manner such that these steps could be repeated in excess of one million times without the maximum depth of the depression being reduced by more than five micrometers.

In yet another preferred embodiment of the invention, the cliché comprises a piece of cemented carbide material

While the principal advantages and features of the invention have been described above, a more complete and thorough understanding of the invention may be obtained by preferring to the drawings and the detailed description of the preferred embodiment, which follow.

### Brief Description of the Drawings

Figure 1 is an example of an iris simulating image comprising a plurality of distinct colorant layers overlaying each other.
Figures 2a through 2d are the individual colorant layers that, in combination, form the iris simulating image shown in Figure 1.
Figures 3a through 3e depict steps of a standard pad-printing process for transferring colorant from a cliché to a contact lens.
Figure 4 is a detail perspective view of a cliché depicting an example of two individual depressions of a larger depression pattern formed into the cliché.

Reference characters in the written specification indicate corresponding items shown throughout the drawing figures.

### Detailed Description of the Preferred Embodiments of the Invention

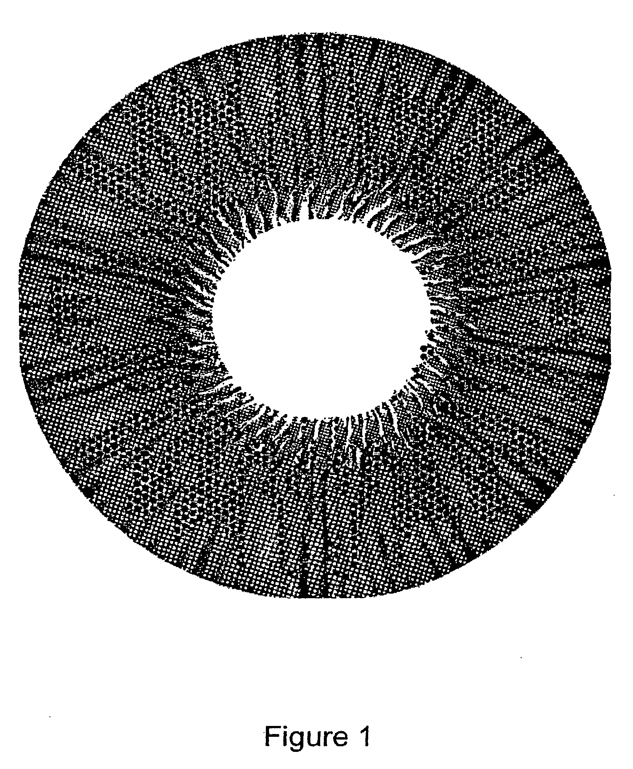

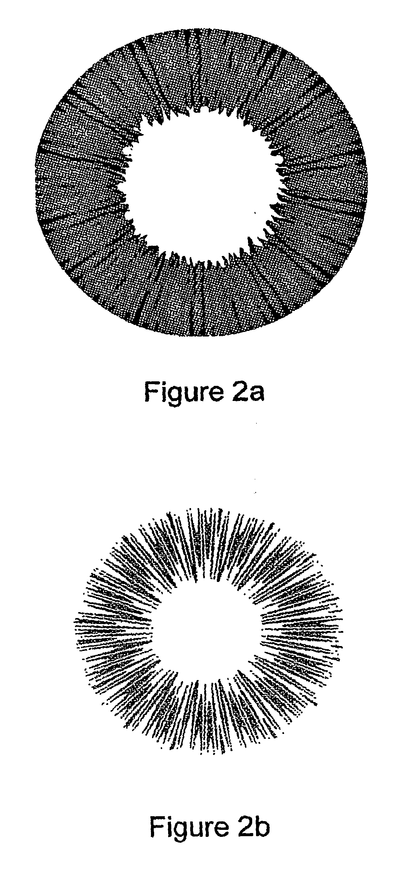

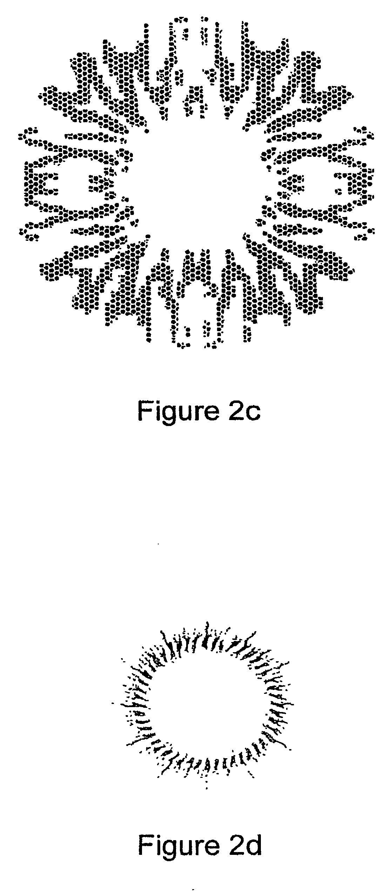

An example of an iris simulating image for use in coloring contact lenses via a pad-printing process is shown in Figure 1. The iris simulating image 20 comprises the plurality of individual colorant layers shown in Figures 2a through 2d. Using a pad-printing process, the individual colorant layers are each separately applied to a contact lens.

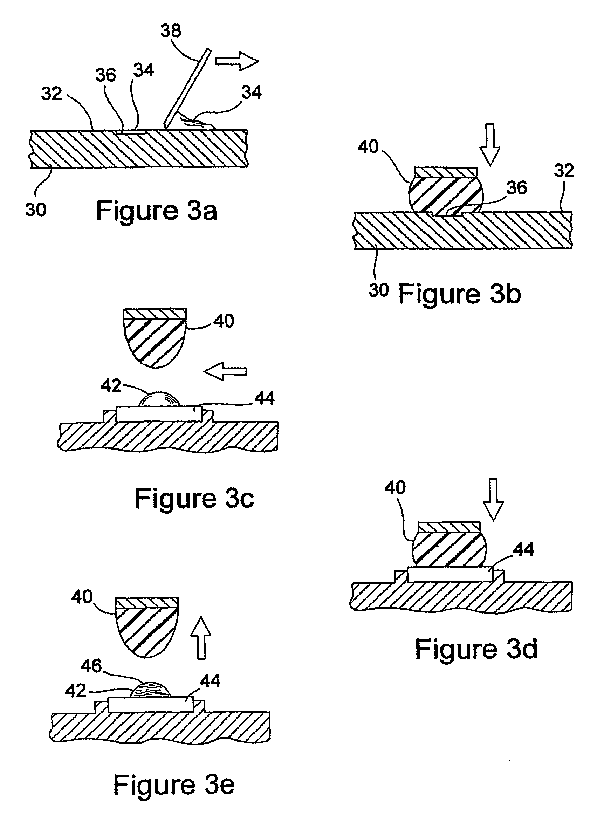

The process of printing a colorant layer on a contact lens using a pad-printing process is schematically shown in Figures 3a through 3e. As depicted in Figure 3a, a cliché 30 having a flat surface 32 is flooded with a fluent colorant 34. The cliché 30 has at least one depression 36 that extends into the material forming the cliché through the flat surface 32. The depression 30 or set of depressions is configured such that when viewed from directly above the flat surface 32, the depression or set of depressions create a pattern identical to the particular colorant layer sought to be applied to a contact lens (i.e., a pattern such as shown in Figures 2a through 2d). A doctor blade 38, or in some cases a portion of an ink cup, is engaged with and swept across the flat surface 32 of the cliché 30. to wipe excess fluent colorant 34 from the portion of the flat surface surrounding the depression(s) 36, leaving fluent colorant in the depression(s). Following these steps and as shown in Figure 3b, a conventional pad-printing pad 40 is then vertically aligned with the depression 36 and pressed downward against the cliché 30 to transfer at least some of the fluent colorant 34 in the depression(s) to the pad. The pad 40 is thereafter brought into registration (Figure 3c) with a contact lens substrate 42 held on a lens holder 44 and then pressed (Figure 3d) against the lens substrate to deposit the colorant on the substrate. When the pad 40 is raised from the contact lens substrate 42, at least some of the colorant layer 46 remains on the substrate in the desired pattern for the particular colorant layer, and is allowed to dry. Although not shown, additional colorant layers are thereafter serially printed on the lens substrate 42 by transferring fluent colorant from other clichés (or other portions of the same cliché) that have distinct patterns or arrangement of depressions. Preferably, different fluent colorants are used for each distinct pattern. Once transferred to the contact lens substrate 42, the individual colorant layers combine to form the complete iris-simulating image (such as shown in Figure 1).

The number of colorant layers making up the overall image sought to be printed on contact lenses can vary, and in some cases may be only one. However, the present invention is particularly advantageous when the image sought to be printed is an iris simulating image comprising multiple colorant layers.

Typically the images sought to be printed on contact lenses are created or edited using computers. For example, a computer having a processor such as an Intel Pentium-4^{®} processor and that is equipped with a vector graphics design program such as Adobe Illustrator is well suited for editing such images. In situations where the image to be printed is an iris simulating image, an initial digitized image pattern may be obtained by scanning a photograph or rendering of a iris simulating pattern the computer, via a digital camera, or any other means of obtaining an digitized image of an iris pattern. Alternatively, the iris simulating patterns can be created from scratch using computer software. When using a pad-printing process, several sub-images, each representing a separate colorant layer, may be generated. Depressions are then formed into clichés to match the images or sub-images as described below.

Unlike prior art techniques used to create clichés for pad-printing contact lenses, the present invention utilizes different materials and different methods of creating depressions in the clichés. Preferably each cliché is formed from a piece of cemented cabide material. As used herein, cemented carbide is meant to include Tungsten Carbide, Molybdenum Carbide, Tantalum Carbide, Rhenium Carbide, Columbium Carbide, Alumon Carbide, Barium Carbide, Boron Carbide, Calcium Carbide, Cerium Carbide, Hafnium Carbide, Iron Carbide, Itrion Carbide, Lantion Carbide, Lition Carbide, Mangese Carbide, Molibion Carbide, Niobium Carbide, Neodymium Carbide, Nigel Carbide, Nitron Carbide, Praseon Carbide, Samarium Carbide, Sodium Carbide, Selenium Carbide, Silicon Carbide, Tantalum Carbide, Torion Carbide, Titanium Carbide, Uranium Carbide, Vanadium Carbide, Zircon Carbide, and any other cemented carbide belonging to the class of hard, wear-resistant, refractory materials in which the hard carbide particles are bound together, or cemented, by a binder and binderless carbides such as Cerbide^{™}, Hardide^{™}, and any heterogeneous combination of metal(s) or alloy(s) with one or more ceramic phases in which the latter constitutes approximately fifteen to eighty-five percent by volume and in which there is relatively little solubility between metallic and ceramic phases at the preparation temperature.

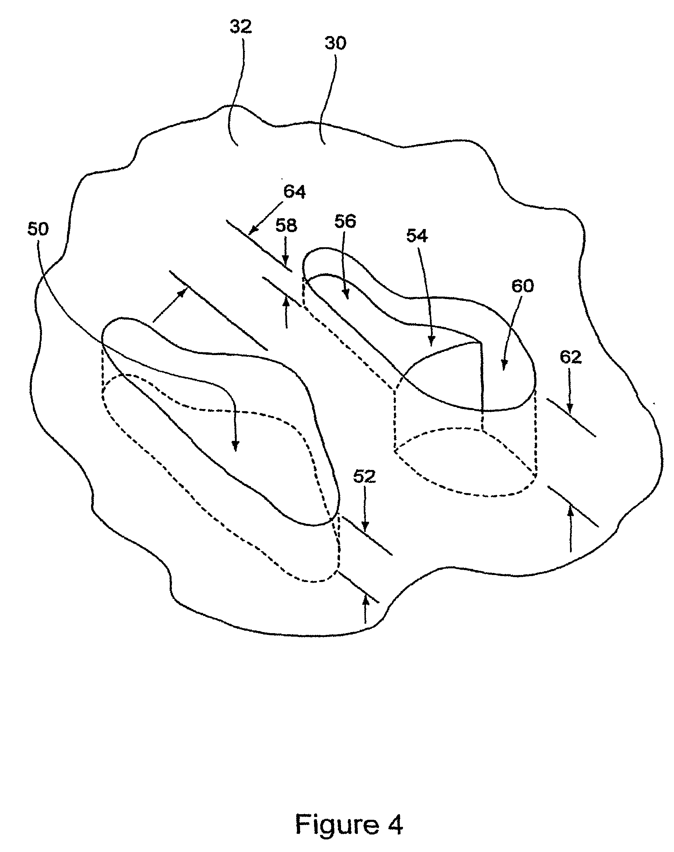

A perspective view of a portion of an exemplary cliché 30 is shown in Figure 4. The piece of cemented carbide material used to form the cliché 30 preferably comprises a flat surface 32 having surface finish of six micro-inches centre line average (CLA). Pieces of cemented carbide material meeting these specifications can be purchased through various cemented carbide material suppliers such as Philadelphia Carbide Company located in Oreland, Pennsylvania. The piece of material used to create the cliché 30 is preferably plate material having overall dimensions similar to prior art pad-printing plates or clichés.

Preferably a plurality of depressions 36 corresponding to the image or image colorant layer sought to be reproduced using the cliché 30 are formed into the piece of material though the flat surface 32. Unlike prior art techniques of forming depressions in clichés, the present invention utilizes an electrical discharge machining (EDM) process to create the depressions 36. This is preferably done by saving the desired image is a digitized format such as IGES (Initial Graphics Exchange Specification) format and exporting it to computer aided machining software (CAM software) (available through SmalTec International of Naperville, Illinois). Preferably, the CAM software, in turn, drives a CNC Controller and an electrical pulse controller used to run a wire electrical discharge grinding (WEDG) EDM device, such a Panasonic model MG-ED72W (also available through SmalTec International), to thereby form the depressions into the piece of material. Alteratively, a Die-Sinking EDM (also known as Sinker, Ram-Type, Conventional, Plunge or Vertical EDM) can be used to from the depressions into the piece of material. When using a Die-Sinking EDM, a raised reciprocal pattern of the image is preferably formed on the electrode of the EDM machine using known lasing processes. For example, positive image or reciprocal relief of the depressions from a colorant layer can be etched into an electrode comprised of a tungsten-copper alloy (such as is available through Saturn Industries of Hudson, New York) via a yttrium aluminum garnet (YAG) laser (such as an Electrox^{®} Scriba II, commercially available from Electrox USA, Indianapolis, Indiana). It should be appreciated that a cliché can comprises a single set of depressions forming a single color layer or that a cliché may comprise a plurality of sets of depressions, with each set forming a separate image pattern.

Using the forgoing methods to create the depressions of a color contact pad-printing cliche provides several advantages over prior art methods of forming depressions. In particular, using a WEDG EDM process allows for the formation of very small and precise depressions that are not achievable using prior art techniques of forming color contact pad-printing clichés. To illustrate this point, a detail perspective view depicting a pair of depression formed into the flat surface 32 of a cliché 30 is shown in Figure 4. A first depression 50 is shown extending into the piece of material through the plane of the flat surface 32 of the cliché 30. The first depression 50 extends into the material of the cliché 30 a constant depth 52 perpendicular to and beyond the plane of the flat surface 32. The second depression 54 comprises a first portion 56 that extends into the material of the cliché 30 a first depth 58 perpendicular to and beyond the plane of the flat surface 32, and a second portion 60 that extends into the material of the cliché a second depth 62 perpendicular to and beyond the plane of the flat surface.

For purposes of explaining resolution details of the depressions, it should be appreciated that a projected surface area can be determined for each of the first and second depressions 50, 54 by projecting the depressions perpendicularly onto the plane of the flat surface 32. Using a EDM process to form the depressions allows very precise placement of the depressions. For example, at least a portion of the projected surface area of the first depression 50 can be within 50 micrometers, 25 micrometers, 10 micrometer, 5 micrometers, and even 2.5 micrometers of a portion of the second depression 54. This spacing is represented by the numeral 62 in Figure 4. Additionally, the projected surface areas of the depressions can be rather small. For example, the projected surface area of an individual depression can be less than 6000 square micrometers, or if desired, less than 4000 square micrometers, 2000 square micrometers, 1000 square micrometers, or even 800 square micrometers. Still further, using EDM processes to create the depressions, the depth of any depression can vary by more than six micrometers from one portion to another portion of the depression. Although the variance in the depth of a depression is preferably gradual, the depth variance can also be abrupt. For example the first depth 58 of the first portion 56 of the second depression 54 shown in Figure 4 could be seven micrometers while the second depth 62 of its second portion 60 may be in excess of twenty micrometers.

By allowing high resolution depressions to be formed the clichés, very intricate patterns of depressions can be formed to collectively create a colorant layer of an image to be transferred to a contact lens. Additionally, by allowing the depth of depression to be varied and allowing the depths of separate depressions to be distinct, different thicknesses of a colorant can be simultaneously transferred to a contact lens using a pad-printing process. In situation where the colorant is not fully opaque, this allows control over the shade of the color resulting from the colorant throughout different portions of the image. Thus, using the methods described herein, a pad-printing process can achieve image resolutions and quality near those achievable via inject processes.

By forming the clichés out of cemented carbide material, the hardness of the clichés is in excess of the industry standard Rockwell 62-64 ("C" Scale) steel currently employed in the art. Additionally, the wear resistance of clichés is nearly 100 times greater than that of the material currently employed in the art. As discussed above, the wiping step of a pad-printing process invariably wears a cliché in a manner such that the depth of the depressions is gradually reduced. By increasing the wear resistance of the clichés, such wear can be reduced to less than six micrometers per million pad-printing cycles. Moreover, in some cases, the wear may be reduced to less than six micrometers per ten million cycles. This allows clichés formed using methods of this invention to have a useful life many time greater than the useful life of clichés presently used in the art of coloring contact lenses. By increasing the useful life of the clichés, the frequency of replacing the clichés can be reduced by a factor of more than one hundred. This greatly increases productivity and efficiency by reducing the undesirable downtime resulting from the alignment process each time the clichés are replaced.

While the present invention has been described in reference to a specific embodiment, in light of the foregoing, it should be understood that all matter contained in the above description or shown in the accompanying drawings is intended to be interpreted as illustrative and not in a limiting sense and that various modifications and variations of the invention may be constructed without departing from the scope of the invention defined by the following claims. Thus, other possible variations and modifications should be appreciated.

Furthermore, it should be understood that when introducing elements of the present invention in the claims or in the above description of the preferred embodiment of the invention, the terms "comprising," "including," and "having" are intended to be open-ended and mean that there may be additional elements other than the listed elements. Similarly, the term "portion" should be construed as meaning some or all of the item or element that it qualifies.

## Claims

1. A method comprising:
forming a cliché (30), the cliché (30) comprising a piece of material having at least one depression (36) formed thereinto, the forming of the cliché (30) comprising using an electrical discharge machining process to create the at least one depression (36);
introducing a fluent colorant (34) into the depression (36) of the cliché (30); and
transferring at least some of the colorant (34) from the depression (36) to a contact lens (46).

2. A method in accordance with claim 1 wherein the step of forming the cliché (30) occurs in a manner such that the piece of material has a flat surface portion (32) that defines a plane and such that the depression (36) extends through the plane and into the piece of material a maximum depth perpendicular to and beyond the plane, and further comprising the steps of
wiping excess fluent colorant (34) from the flat surface (32) surrounding the depression (36), the wiping causing the piece of material to wear in a manner such that the maximum depth of the depression (36) is reduced; and
repeating each of the steps of introducing a fluent colorant (34) into the depression of the cliché (30), wiping excess fluent colorant (34) from the flat surface (32) surrounding the depression (36), and transferring at least some of the colorant (34) from the depression (36) to a contact lens in excess of one million times without reducing the maximum depth of the depression (36) by more than five micrometers.

3. A method in accordance with claim 1 wherein the step of forming the cliché (30) occurs in a manner such that the piece of material has a flat surface portion that defines a plane and such that the piece of material comprises a plurality of spaced-apart depressions (36) that extend through the plane and into the piece of material and that are formed into the piece of material using the electrical discharge machining process, each of the depressions (36) having a projected surface area defined by projecting such depression (36) perpendicularly onto the plane, each of the projected surface areas of at least twenty-five percent of the depressions being less than one-thousand square micrometers, and wherein the step of introducing the fluent colorant (34) comprises introducing the fluent colorant (34) into each of the plurality of depressions (36) and the step of transferring at least some of the colorant (34) comprises simultaneously transferring at least some of the colorant (34) from each of the depressions (36) to the contact lens (42).

4. A method in accordance with claim 1 wherein the step of forming the cliché (30) occurs in a manner such that the piece of material has a flat surface portion that defines as plane and such that the piece of material comprises a plurality of spaced-apart depressions (36) that extend through the plane and into the piece of material and that are formed into the piece of material using the electrical discharge machining process, each of the depressions (36) having a projected surface area defined by projecting such depression (36) perpendicularly onto the plane, at least a portion of the projected surface area of each of at least twenty percent of the depressions (36) each being within twenty five micrometers of another portion of another one of the depressions (36), and wherein the step introducing the fluent colorant (34) comprises introducing the fluent colorant (34) into each of the plurality of depressions (36) and the step of transferring at least some of the colorant (34) comprises simultaneously transferring at least some of the colorant (34) from each of the depressions (36) to the contact lens (42).

5. A method in accordance with claim 4 wherein the step of forming the cliché (30) occurs in a manner such that each of the projected surface areas of at least twenty five percent of the depressions (36) is less than one-thousand square micrometers.

6. A method in accordance with claim 1 wherein the step of forming the cliché (30) occurs in a manner such that the piece of material has a flat surface portion that defines a plane and such that the depression (36) comprises a first portion that extends through the plane and into the piece of material a first maximum depth perpendicular to and beyond the plane and such that the depression (36) comprises a second portion that extends through the plane and into the piece of material a second maximum depth perpendicular to and beyond the plane, the first maximum depth being in excess of six micrometers greater than the second maximum depth.

7. A method in accordance with claim 1, wherein the piece of material forming the cliché (30) has a flat surface portion (32) and the at least one depression (36) is formed thereinto, the flat surface portion (32) defining a plane, the depression (36) extending through the plane and into the piece of material a maximum depth perpendicular to and beyond the plane,
wiping excess fluent colorant (34) from the flat surface portion (32) surrounding the depression (36), the wiping causing the piece of material to wear in a manner such that the maximum depth of the depression (36) is reduced;
the steps of introducing a fluent colorant (34) into the depression (36) of the cliché, wiping excess fluent colorant (34) from the flat surface portion (32) surrounding the depression, and transferring at least some of the colorant (34) from the depression (36) to a contact lens (42) occurring in a manner such that the steps of introducing a fluent colorant (34) into the depression (36) of the cliché, wiping excess fluent colorant (34) from the flat surface portion (32) surrounding the depression (36), and transferring at least some of the colorant (34) from the depression (36) to a contact lens (42) could be repeated in excess of one million times without the maximum depth of the depression (36) being reduced by more than five micrometers.

8. A method in accordance with claim 7 wherein the steps of introducing a fluent colorant (34) into the depression (36) of the cliché (30), wiping excess fluent colorant (34) from the flat surface (32) portion surrounding the depression (36), and transferring at least some of the colorant (34) from the depression (36) to a contact lens (42) are repeated in excess of one million times without the maximum depth of the depression (36) being reduced by more than five micrometers.

9. A method in accordance with claim 7 wherein the steps of introducing a fluent colorant (34) into the depression (36) of the cliché (30), wiping excess fluent colorant (34) from the flat surface portion (32) surrounding the depression (36), and transferring at least some of the colorant (34) from the depression (36) to a contact lens (42) occur in a manner such that the steps of introducing a fluent colorant (34) into the depression (36) of the cliché (30), wiping excess fluent colorant (34) from the flat surface portion (32) surrounding the depression (36), and transferring at least some of the colorant (34) from the depression (36) to a contact lens (42) could be repeated in excess of five million times without the maximum depth of the depression (36) being reduced by more than five micrometers.

10. A method in accordance with claim 7 wherein the step of forming the cliché (30) occurs in a manner such that the depression (36) comprises a first portion that extends through the plane and into the piece of material a first maximum depth perpendicular to and beyond the plane and such that the depression (36) comprises a second portion that extends through the plane and into the piece of material a second maximum depth perpendicular to and beyond the plane, the first maximum depth being in excess of six micrometers greater than the second maximum depth.

11. A method in accordance with claim 7 wherein the step of forming the cliché (30) occurs in a manner such that the piece of material comprises a plurality of spaced-apart depressions (36) that extend through the plane and into the piece of material, each of the depressions (36) having a projected surface area defined by projecting such depression (36) perpendicularly onto the plane, at least a portion of the projected surface area of at least twenty percent of the depressions (36) each being within twenty-five micrometers of another portion of another one of the depressions (36), and wherein the step introducing the .fluent colorant (34) comprises introducing the fluent colorant (34) into each of the plurality of depressions (36) and the step of transferring at least some of the colorant (34) comprises simultaneously transferring at least some of the colorant (34) from each of the depressions (36) to the contact lens (42).

12. A method in accordance with claim 11 wherein the step of forming the cliché (30) occurs in a manner such that each of the projected surface areas of at least twenty-five percent of the depressions (36) is less than one-thousand square micrometers.

13. A method in accordance with claim 11 wherein the step of forming the cliché (30) occurs in a manner such that at least one of the depressions (36) comprises a first portion that extends through the plane and into the piece of material a first maximum depth perpendicular to and beyond the plane and a second portion that extends through the plane and into the piece of material a second maximum depth perpendicular to and beyond the plane, the first maximum depth being in excess of six micrometers greater than the second maximum depth.

14. A method in accordance with any preceding claim, wherein the step of
forming the cliché (30) occurs in a manner such that the piece of material is formed from a material having a hardness rating in excess of ("C" Scale) Rockwell 64.

15. A method in accordance with any preceding claim wherein the step of forming the cliché (30) occurs in a manner such that the piece of material is formed from a cemented carbide material.

16. A method in accordance with any preceding claim wherein the electrical discharge machining process utilized in the step of forming the cliché (30) is a wire electrical discharge grinding process.

## Patentansprüche

1. Verfahren, das aufweist:
Herstellen eines Klischees (30), wobei das Klischee (30) ein Materialstück aufweist, in dem wenigstens eine Vertiefung (36) ausgebildet ist, wobei das Herstellen des Klischees (30) das Verwenden eines elektroerosiven Bearbeitungsprozesses umfasst, um die wenigstens eine Vertiefung (36) zu erzeugen;
Einführen eines fließfähigen Farbstoffes (34) in die Vertiefung (36) des Klischees (30); und
Überführen wenigstens eines Teils des Farbstoffes (34) aus der Vertiefung (36) auf eine Kontaktlinse (46).

2. Verfahren nach Anspruch 1, bei dem der Schritt des Herstellens des Klischees (30) in einer Weise derart geschieht, dass das Materialstück einen ebenen Oberflächenbereich (32) hat, der eine Ebene definiert, und derart, dass sich die Vertiefung (36) durch die Ebene und in das Materialstück in eine maximale Tiefe senkrecht zu der und über die Ebene hinaus erstreckt, und weiter mit den Schritten:
Wischen überschüssigen fließfähigen Farbstoffes (34) von der ebenen Fläche (32), die die Vertiefung (36) umgibt, wobei das Wischen bewirkt, dass das Materialstück in einer Weise abgetragen wird, dass die maximale Tiefe der Vertiefung (36) verringert wird; und
Wiederholen jedes der Schritte des Einführens eines fließfähigen Farbstoffes (34) in die Vertiefung des Klischees (30), Wischen überschüssigen fließfähigen Farbstoffes (34) von der ebenen Fläche (32), welche die Vertiefung (36) umgibt, und Überführen wenigstens eines Teils des Farbstoffes (34) aus der Vertiefung (36) auf eine Kontaktlinse mehr als eine Million Mal, ohne dass die maximale Tiefe der Vertiefung (36) um mehr als 5 Mikrometer verringert wird.

3. Verfahren nach Anspruch 1, bei dem der Schritt des Herstellens des Klischees (30) in einer Weise derart geschieht, dass das Materialstück einen ebenen Flächenbereich hat, der eine Ebene definiert, und derart, dass das Materialstück eine Vielzahl beabstandeter Vertiefungen (36) aufweist, die sich durch die Ebene und in das Materialstück erstrecken und die in das Materialstück geformt sind, indem der elektroerosive Bearbeitungsprozess verwendet wird, wobei jede der Vertiefungen (36) ein projiziertes Flächengebiet hat, das durch Projizieren einer derartigen Vertiefung (36) senkrecht auf die Ebene definiert ist, wobei jedes der projizierten Flächengebiete von wenigstens fünfundzwanzig Prozent der Vertiefungen weniger als eintausend Quadratmikrometer groß ist, und wobei der Schritt des Einführens des fließfähigen Farbstoffes (34) das Einführen des fließfähigen Farbstoffes (34) in jede aus der Vielzahl der Vertiefungen (36) umfasst und der Schritt des Überführens wenigstens eines Teils des Farbstoffes (34) das gleichzeitige Überführen wenigstens eines Teils des Farbstoffes (34) aus jeder der Vertiefungen (36) auf die Kontaktlinse (42) aufweist.

4. Verfahren nach Anspruch 1, bei dem der Schritt des Herstellens des Klischees (30) in einer Weise derart geschieht, dass das Materialstück einen ebenen Flächenbereich hat, der eine Ebene definiert, und derart, dass das Materialstück eine Vielzahl beabstandeter Vertiefungen (36) aufweist, die sich durch die Ebene und in das Materialstück erstrecken und die in das Materialstück geformt sind, indem der elektroerosive Bearbeitungsprozess verwendet wird, wobei jede der Vertiefungen (36) ein projiziertes Flächengebiet hat, das durch Projizieren einer derartigen Vertiefung (36) senkrecht auf die Ebene definiert ist, wobei wenigstens ein Teil des projizierten Flächengebietes von jeder von wenigstens zwanzig Prozent der Vertiefungen (36) jeweils innerhalb von fünfundzwanzig Mikrometern eines anderen Teiles einer anderen der Vertiefungen (36) liegt, und wobei der Schritt des Einführens des fließfähigen Farbstoffes (34) das Einführen des fließfähigen Farbstoffes (34) in jede aus der Vielzahl der Vertiefungen (36) umfasst und der Schritt des Überführens wenigstens eines Teils des Farbstoffes (34) das gleichzeitige Überführen wenigstens eines Teils des Farbstoffes (34) aus jeder der Vertiefungen (36) auf die Kontaktlinse (42) aufweist.

5. Verfahren nach Anspruch 5, bei dem der Schritt des Herstellens des Klischees (30) in einer Weise derart geschieht, dass jedes der projizierten Flächengebiete von wenigstens fünfundzwanzig Prozent der Vertiefungen (36) kleiner als eintausend Quadratmikrometer ist.

6. Verfahren nach Anspruch 1, bei dem der Schritt des Herstellens des Klischees (30) in einer Weise derart geschieht, dass das Materialstück einen ebenen Flächenbereich hat, der eine Ebene definiert, und derart, dass die Vertiefung (36) einen ersten Bereich aufweist, der sich durch die Ebene und in das Materialstück in eine erste maximale Tiefe senkrecht zu der und über die Ebene hinaus erstreckt, und derart, dass die Vertiefung (36) einen zweiten Bereich aufweist, der sich durch die Ebene und in das Materialstück in eine zweite maximale Tiefe senkrecht zu der und über die Ebene hinaus erstreckt, wobei die erste maximale Tiefe mehr als sechs Mikrometer größer ist als die zweite maximale Tiefe.

7. Verfahren nach Anspruch 1, bei dem das Materialstück, das das Klischee (30) bildet, einen ebenen Flächenbereich (32) hat und die wenigstens eine Vertiefung (36) in diesem ausgebildet ist, wobei der ebene Flächenbereich (32) eine Ebene definiert, wobei sich die Vertiefung (36) durch die Ebene und in das Materialstück in eine maximale Tiefe senkrecht zu der und über die Ebene hinaus erstreckt;
Wischen überschüssigen fließfähigen Farbstoffes (34) von dem ebenen Flächenbereich (32), der die Vertiefung (36) umgibt, wobei das Wischen bewirkt, dass das Materialstück in einer Weise abgetragen wird, dass die maximale Tiefe der Vertiefung (36) verringert wird;
wobei die Schritte des Einführens eines fließfähigen Farbstoffes (34) in die Vertiefung (36) des Klischees, des Wischens überschüssigen fließfähigen Farbstoffes (34) von dem ebenen Flächenbereich (32), der der Vertiefung umgibt, und des Überführens wenigstens eines Teils des Farbstoffes (34) aus der Vertiefung (36) auf eine Kontaktlinse (42) in einer Weise derart geschehen, dass die Schritte des Einführens eines fließfähigen Farbstoffes (34) in die Vertiefung (36) des Klischees, des Wischens überschüssigen Farbstoffes (34) von dem ebenen Flächenbereich (32), der die Vertiefung (36) umgibt, und des Überführens wenigstens eines Teils des Farbstoffes (34) aus der Vertiefung (36) auf eine Kontaktlinse (42) mehr als eine Millionen Mal wiederholt werden könnten, ohne dass die maximale Tiefe der Vertiefung (36) um mehr als fünf Mikrometer verringert wird.

8. Verfahren nach Anspruch 7, bei dem die Schritte des Einführens eines fließfähigen Farbstoffes (34) in die Vertiefung (36) des Klischees (30), des Wischens überflüssigen Farbstoffes (34) von dem ebenen Flächenbereich (32), der die Vertiefung umgibt, und des Überführens wenigstens eines Teils des Farbstoffes (34) aus der Vertiefung (36) auf eine Kontaktlinse (42) mehr als eine Millionen Mal wiederholt werden, ohne dass die maximale Tiefe der Vertiefung (36) um mehr als fünf Mikrometer verringert wird.

9. Verfahren nach Anspruch 7, bei dem die Schritte des Einführens eines fließfähigen Farbstoffes (34) in die Vertiefung (36) des Klischees (30), des Wischens überschüssigen Farbstoffes (34) von dem ebenen Flächenbereich (32), der die Vertiefung (36) umgibt, und des Überführens wenigstens eines Teils des Farbstoffes (34) aus der Vertiefung (36) auf eine Kontaktlinse (42) in einer solchen Weise geschehen, dass die Schritte des Einführens eines fließfähigen Farbstoffes (34) in die Vertiefung (36) des Klischees (30), des Wischens überschüssigen fließfähigen Farbstoffes (34) von dem ebenen Flächenabschnitt (32), die die Vertiefung (36) umgibt, und des Überführens wenigstens eines Teils des Farbstoffes (34) aus der Vertiefung (36) auf eine Kontaktlinse (42) mehr als fünf Millionen Mal wiederholt werden könnten, ohne dass die maximale Tiefe der Vertiefung (36) um mehr als fünf Mikrometer verringert wird.

10. Verfahren nach Anspruch 7, bei dem der Schritt des Herstellens des Klischees (30) in einer solchen Weise geschieht, das die Vertiefung (36) einen ersten Bereich aufweist, der sich durch die Ebene und in das Materialstück in eine erste maximale Tiefe senkrecht zu der und über die Ebene hinaus erstreckt, und derart, dass die Vertiefung (36) einen zweiten Bereich aufweist, der sich durch die Ebene und in das Materialstück in eine zweite maximale Tiefe senkrecht zu der und über die Ebene hinaus erstreckt, wobei die erste maximale Tiefe mehr als sechs Mikrometer größer ist als die zweite maximale Tiefe.

11. Verfahren nach Anspruch 7, bei dem die Schritte des Herstellens des Klischees (30) in einer solchen Weise derart geschieht, das das Materialstück eine Vielzahl beabstandeter Vertiefungen (36) aufweist, die sich durch die Ebene und in das Materialstück erstrecken, wobei jede der Vertiefungen (36) ein projiziertes Flächengebiet hat, das durch Projizieren einer solchen Vertiefung (36) senkrecht auf die Ebene definiert ist, wobei wenigstens ein Teil des projizierten Flächengebietes von wenigstens zwanzig Prozent der Vertiefungen (36) jeweils innerhalb von fünfundzwanzig Mikrometern eines anderen Teils einer anderen der Vertiefungen (36) ist, und bei dem der Schritt des Einführens des fließfähigen Farbstoffes (34) das Einführen des fließfähigen Farbstoffes (34) in jede der Vielzahl der Vertiefungen (36) umfasst und der Schritt des Überführens wenigstens eines Teils des Farbstoffes (34) das gleichzeitige Überführen wenigstens eines Teils des Farbstoffes (34) aus jeder der Vertiefungen (36) auf die Kontaktlinse (42) aufweist.

12. Verfahren nach Anspruch 11, bei dem der Schritt des Herstellens des Klischees (30) in einer Weise derart geschieht, dass jedes der projizierten Flächengebiete von wenigstens fünfundzwanzig Prozent der Vertiefungen (36) weniger als eintausend Quadratmikrometer groß ist.

13. Verfahren nach Anspruch 11, bei dem der Schritt des Herstellens des Klischees (30) in einer Weise derart geschieht, dass wenigstens eine der Vertiefungen (36) einen ersten Bereich, der sich durch die Ebene und in das Materialstück in eine erste maximale Tiefe senkrecht zu der und über die Ebene hinaus erstreckt, und einen zweiten Bereich, der sich durch die Ebene und in das Materialstück in eine zweite maximale Tiefe senkrecht zu der und über die Ebene hinaus erstreckt, aufweist, wobei die erste maximale Tiefe mehr als sechs Mikrometer größer ist als die zweite maximale Tiefe.

14. Verfahren nach einem der vorangehenden Ansprüche, bei dem der Schritt des Herstellens des Klischees (30) in einer Weise derart geschieht, dass das Materialstück aus einem Material gebildet ist, das eine Härte hat, die mit mehr als Rockwell 64 ("C"-Skala) bewertet wird.

15. Verfahren nach einem der vorangehenden Ansprüche, bei dem der Schritt des Herstellens des Klischees (30) in einer Weise derart geschieht, dass das Materialstück aus einem zementierten Karbidmaterial gebildet ist

16. Verfahren nach einem der vorangehenden Ansprüche, bei dem der Bearbeitungsprozess mit elektrischer Entladung, der bei dem Schritt des Herstellens des Klischees (30) verwendet wird, ein elektroerosiver Abtrageprozess mit Drahtelektrode ist.

## Revendications

1. Méthode comprenant les étapes consistant à :
• former un cliché (30), le cliché (30) comprenant une pièce de matériau possédant au moins un creux (36) formé dans celle-ci, l'étape consistant à former le cliché (30) comprenant l'étape consistant à utiliser un procédé d'usinage par électro-érosion pour créer l'au moins un creux (36) ;
■ introduire un colorant liquide (34) dans le creux (36) du cliché (30) ; et
■ transférer au moins une certaine quantité du colorant (34) du creux (36) à une lentille de contact (46).

2. Méthode selon la revendication 1, dans laquelle l'étape consistant à former le cliché (30) se produit de manière telle que la pièce de matériau possède une partie de surface plate (32) qui définit un plan et telle que le creux (36) s'étende à travers le plan et dans la pièce de matériau selon une profondeur maximum perpendiculaire au et au-delà du plan, et comprenant en outre les étapes consistant à :
■ essuyer l'excès de colorant liquide (34) à partir de la surface plate (32) entourant le creux (36), l'étape consistant à essuyer faisant en sorte que la pièce de matériau s'use de manière telle que la profondeur maximum du creux (36) soit réduite ; et
■ répéter chacune des étapes consistant à introduire un colorant liquide (34) dans le creux du cliché (30), essuyer l'excès de colorant liquide (34) à partir de la surface plate (32) entourant le creux (36), et transférer au moins une certaine quantité du colorant (34) du creux (36) à une lentille de contact plus d'un million de fois sans réduire la profondeur maximum du creux (36) de plus de cinq micromètres.

3. Méthode selon la revendication 1, dans laquelle l'étape consistant à former le cliché (30) se produit de manière telle que la pièce de matériau possède une partie de surface plate qui définit un plan et telle que la pièce de matériau comprenne une pluralité de creux espacés les uns des autres (36) qui s'étendent à travers le plan et dans la pièce de matériau et qui sont formés dans la pièce de matériau à l'aide du procédé d'usinage par électro-érosion, chacun des creux (36) possédant une superficie projetée définie en projetant un tel creux (36) perpendiculairement sur le plan, chacune des superficies projetées d'au moins vingt-cinq pour cent des creux étant inférieure à mille micromètres carrés, et dans laquelle l'étape consistant à introduire le colorant liquide (34) comprend l'étape consistant à introduire le colorant liquide (34) dans chacun de la pluralité de creux (36) et l'étape consistant à transférer au moins une certaine quantité du colorant (34) comprend simultanément l'étape consistant à transférer au moins une certaine quantité du colorant (34) de chacun des creux (36) à la lentille de contact (42).

4. Méthode selon la revendication 1, dans laquelle l'étape consistant à former le cliché (30) se produit de manière telle que la pièce de matériau possède une partie de surface plate qui définit un plan et telle que la pièce de matériau comprenne une pluralité de creux espacés les uns des autres (36) qui s'étendent à travers le plan et dans la pièce de matériau et qui sont formés dans la pièce de matériau à l'aide du procédé d'usinage par électro-érosion, chacun des creux (36) possédant une superficie projetée définie en projetant un tel creux (36) perpendiculairement sur le plan, au moins une partie de la superficie projetée de chacun d'au moins vingt pour cent des creux (36) étant chacune au sein de vingt-cinq micromètres d'une autre partie d'un autre des creux (36), et dans laquelle l'étape consistant à introduire le colorant liquide (34) comprend l'étape consistant à introduire le colorant liquide (34) dans chacun de la pluralité de creux (36) et l'étape consistant à transférer au moins une certaine quantité du colorant (34) comprend simultanément l'étape consistant à transférer au moins une certaine quantité du colorant (34) de chacun des creux (36) à la lentille de contact (42).

5. Méthode selon la revendication 6, dans laquelle l'étape consistant à former le cliché (30) se produit de manière telle que chacune des superficies projetées d'au moins vingt-cinq pour cent des creux (36) est inférieure à mille micromètres carrés.

6. Méthode selon la revendication 1, dans laquelle l'étape consistant à former le cliché (30) se produit de manière telle que la pièce de matériau possède une partie de surface plate qui définit un plan et telle que le creux (36) comprenne une première partie qui s'étend à travers le plan et dans la pièce de matériau selon une première profondeur maximum perpendiculaire au et au-delà du plan et telle que le creux (36) comprenne une seconde partie qui s'étend à travers le plan et dans la pièce de matériau selon une seconde profondeur maximum perpendiculaire au et au-delà du plan, la première profondeur maximum étant supérieure de plus de six micromètres à la seconde profondeur maximum.

7. Méthode selon la revendication 1, dans laquelle la pièce de matériau formant le cliché (30) possède une partie de surface plate (32) et l'au moins un creux (36) est formé dans celle-ci, la partie de surface plate (32) définissant un plan, le creux (36) s'étendant à travers le plan et dans la pièce de matériau selon une profondeur maximum perpendiculaire au et au-delà du plan ;
essuyer l'excès de colorant liquide (34) à partir de la partie de surface plate (32) entourant le creux (36), l'étape consistant à essuyer faisant en sorte que la pièce de matériau s'use de manière telle que la profondeur maximum du creux (36) soit réduite ; les étapes consistant à introduire un colorant liquide (34) dans le creux (36) du cliché, essuyer l'excès de colorant liquide (34) à partir de la partie de surface plate (32) entourant le creux, et transférer au moins une certaine quantité du colorant (34) du creux (36) à une lentille de contact (42) se produisant de manière telle que les étapes consistant à introduire un colorant liquide (34) dans le creux (36) du cliché, essuyer l'excès de colorant liquide (34) à partir de la partie de surface plate (32) entourant le creux (36), et transférer au moins une certaine quantité du colorant (34) du creux (36) à une lentille de contact (42) pourraient être répétées plus d'un million de fois sans que la profondeur maximum du creux (36) ne soit réduite de plus de cinq micromètres.

8. Méthode selon la revendication 7, dans laquelle les étapes consistant à introduire un colorant liquide (34) dans le creux (36) du cliché (30), essuyer l'excès de colorant liquide (34) à partir de la partie de surface plate (32) entourant le creux (36), et transférer au moins une certaine quantité du colorant (34) à partir du creux (36) à une lentille de contact (42) sont répétées plus d'un million de fois sans que la profondeur maximum du creux (36) ne soit réduite de plus de cinq micromètres.

9. Méthode selon la revendication 7, dans laquelle les étapes consistant à introduire un colorant liquide (34) dans le creux (36) du cliché (30), essuyer l'excès de colorant liquide (34) à partir de la partie de surface plate (32) entourant le creux (36), et transférer au moins une certaine quantité du colorant (34) du creux (36) à une lentille de contact (42) se produisent de manière telle que les étapes consistant à introduire un colorant liquide (34) dans le creux (36) du cliché (30), essuyer l'excès de colorant liquide (34) à partir de la partie de surface plate (32) entourant le creux (36), et transférer au moins une certaine quantité du colorant (34) du creux (36) à une lentille de contact (42) pourraient être répétées plus de cinq millions de fois sans que la profondeur maximum du creux (36) ne soit réduite de plus de cinq micromètres.

10. Méthode selon la revendication 7, dans laquelle l'étape consistant à former le cliché (30) se produit de manière telle que le creux (36) comprenne une première partie qui s'étend à travers le plan et dans la pièce de matériau selon une première profondeur maximum perpendiculaire au et au-delà du plan et telle que le creux (36) comprenne une seconde partie qui s'étend à travers le plan et dans la pièce de matériau selon une seconde profondeur maximum perpendiculaire au et au-delà du plan, la première profondeur maximum étant supérieure de plus de six micromètres à la seconde profondeur maximum.

11. Méthode selon la revendication 7, dans laquelle l'étape consistant à former le cliché (30) se produit de manière telle que la pièce de matériau comprenne une pluralité de creux espacés les uns des autres (36) qui s'étendent à travers le plan et dans la pièce de matériau, chacun des creux (36) possédant une superficie projetée définie en projetant un tel creux (36) perpendiculairement sur le plan, au moins une partie de la superficie projetée d'au moins vingt pour cent des creux (36) étant chacune au sein de vingt-cinq micromètres d'une autre partie d'un autre des creux (36), et dans laquelle l'étape consistant à introduire le colorant liquide (34) comprend l'étape consistant à introduire le colorant liquide (34) dans chacune de la pluralité de creux (36) et l'étape consistant à transférer au moins une certaine quantité du colorant (34) comprend simultanément l'étape consistant à transférer au moins une certaine quantité du colorant (34) de chacun des creux (36) à la lentille de contact (42).

12. Méthode selon la revendication 11, dans laquelle l'étape consistant à former le cliché (30) se produit de manière telle que chacune des superficies projetées d'au moins vingt-cinq pour cent des creux (36) soit inférieure à mille micromètres carrés.

13. Méthode selon la revendication 11, dans laquelle l'étape consistant à former le cliché (30) se produit de manière telle qu'au moins un des creux (36) comprenne une première partie qui s'étend à travers le plan et dans la pièce de matériau selon une première profondeur maximum perpendiculaire au et au-delà du plan et une seconde partie qui s'étend à travers le plan et dans la pièce de matériau selon une seconde profondeur maximum perpendiculaire au et au-delà du plan, la première profondeur maximum étant supérieure de plus de six micromètres à la seconde profondeur maximum.

14. Méthode selon une quelconque revendication précédente, dans laquelle l'étape consistant à former le cliché (30) se produit de manière telle que la pièce de matériau soit formée à partir d'un matériau possédant une valeur nominale de dureté de plus de Rockwell 64 (échelle "C").

15. Méthode selon une quelconque revendication précédente, dans laquelle l'étape consistant à former le cliché (30) se produit de manière telle que la pièce de matériau soit formée à partir d'un matériau de carbure cimenté.

16. Méthode selon une quelconque revendication précédente, dans laquelle le procédé d'usinage par électro-érosion utilisé dans l'étape consistant à former le cliché (30) est un procédé de meulage par électro-érosion par fil.
